# DEMANDE DE BREVET EUROPEEN

(11) **EP 4 851 125 A1**
(43) Date de publication de la demande: **09.12.2026**
(21) Numéro de dépôt: 26181157.4
(22) Date de dépôt: 26.05.2026
(51) Int. Cl.: C04B 40/06, C04B 111/00, C04B 111/28

(54) **COMPOSITION DE MORTIER SEC COMPRENANT DES GRANULATS VÉGÉTAUX OU BIOSOURCÉS**

(30) Priorité: 04.06.2025 FR 2506040
(71) Demandeur: Saint-Gobain Weber France, 94370 Sucy en Brie (FR)
(72) Inventeur: BECQUET, Jérémy, 93300 AUBERVILLIERS (FR)
(74) Mandataire: Saint-Gobain Recherche

(57) **Abrégé**

L'invention concerne une composition de mortier sec comprenant un liant, des granulats végétaux ou biosourcés, un agent entraîneur d'air et du poly(alcool vinylique).

## Description

L'invention concerne le domaine de matériaux de construction. Elle vise plus particulièrement des compositions de mortier sec comprenant un liant et des granulats végétaux ou biosourcés.

Les compositions de mortier sec sont des mélanges pulvérulents comprenant un liant (généralement hydraulique ou aérien) et des granulats. Après mélange (« gâchage ») avec de l'eau, on obtient une pâte (mortier humide ou frais) capable d'être mise en forme puis de prendre et durcir pour former un mortier durci. De tels mortiers peuvent avoir diverses applications : enduits de façade, colles à carrelages, produits de sol tels que des chapes, mortiers de jointoiement, mortiers de maçonnerie et bien d'autres.

L'utilisation de granulats végétaux ou biosourcés présente un certain nombre d'avantages, en termes de réduction de l'empreinte carbone, d'isolation thermique et acoustique, de résistance mécanique et de qualité de l'air intérieur, et favorise l'économie circulaire tout en soutenant l'économie locale. Les granulats végétaux peuvent notamment être utilisés pour la réalisation de blocs, de murs, de cloisons ou d'enduits.

L'invention a pour but d'améliorer les propriétés d'isolation thermique de matériaux de construction comprenant de tels granulats.

A cet effet, l'invention a pour objet une composition de mortier sec comprenant un liant, des granulats végétaux ou biosourcés, un agent entraîneur d'air et du poly(alcool vinylique).

Le liant est normalement un liant minéral. Le liant est de préférence un liant hydraulique ou aérien, en particulier un liant hydraulique ou aérien comprenant de la chaux. Ce dernier est de préférence choisi parmi la chaux aérienne, la chaux hydraulique et le ciment naturel prompt. Le liant comprend avantageusement de la chaux aérienne, en particulier possédant une surface spécifique BET d'au moins 20 m²/g, même d'au moins 30 m²/g (mesurée notamment avec de l'azote). La chaux aérienne, aussi appelée chaux hydratée ou chaux éteinte, est de l'hydroxyde de calcium, obtenu par cuisson de calcaire puis hydratation, et qui durcit en absorbant le dioxyde de carbone de l'air. La chaux hydraulique est obtenue par cuisson de calcaire contenant de l'argile. Le ciment naturel prompt est également fabriqué par cuisson d'un calcaire argileux, mais contenant moins de chaux vive que la chaux hydraulique.

Selon un mode de réalisation, le liant comprend du clinker Portland. Il peut notamment comprendre un ciment de type CEM I, ou encore CEM II.

Avantageusement, le liant comprend à la fois du clinker Portland et un liant hydraulique ou aérien comprenant de la chaux. De manière très préférée, le liant comprend du clinker Portland et de la chaux aérienne, voire est constitué de clinker Portland et de chaux aérienne. Le clinker Portland permet d'obtenir une bonne tenue mécanique à court terme, tandis que la chaux aérienne présente des avantages en termes de perméabilité à la vapeur d'eau. Le rapport massique entre le clinker Portland et la chaux aérienne est de préférence compris entre 1 :2 et 2 :1.

Le liant peut en outre comprendre d'autres composés possédant des propriétés hydrauliques ou pouzzolaniques, tels que les laitiers, notamment les laitiers de haut-fourneau granulé broyé, les cendres volantes, les cendres de biomasse, les pouzzolanes naturelles, les schistes calcinés ou les argiles calcinées (par exemple le métakaolin). Ces composés permettent notamment de réduire l'empreinte carbone du liant.

La teneur en liant est de préférence comprise entre 45 et 80%, notamment entre 50 et 75%, voire entre 60 et 70%, par rapport au poids de composition de mortier sec.

Les granulats végétaux ou biosourcés sont de préférence choisis parmi les granulats de chanvre, de lin, de miscanthus, de maïs, de sorgho, de riz, de bagasses de canne, de paille de céréales, de paille de colza, de paille de tournesol, de paille de maïs, de kénaf, de noix de coco, de bambou, de sciure de bois, de copeaux de bois et leurs mélanges.

Les granulats végétaux sont avantageusement des granulats de chanvre, en particulier de la chènevotte. La chènevotte, obtenue par défibrage mécanique de la paille de chanvre, présente un grand nombre d'avantages. D'une part, la culture du chanvre ne nécessite ni irrigation ni traitements pesticides et d'autre part, le chanvre permet de conférer des bonnes performances thermiques et acoustiques, une bonne régulation de l'hygrothermie dans le bâtiment et une bonne résistance aux rongeurs.

La teneur en granulats végétaux ou biosourcés est de préférence comprise entre 20 et 55%, notamment entre 25 et 50%, voire entre 30 et 45%, par rapport au poids de composition de mortier sec.

La composition de mortier peut également comprendre des granulats autres que végétaux ou biosourcés, en particulier des granulats légers, notamment ayant une masse volumique apparente inférieure à 500 kg/m³, voire inférieure à 200 kg/m³. Les granulats légers sont notamment choisis parmi la perlite, la vermiculite, les billes de verre expansé, les billes de polystyrène expansé, les cénosphères, les silicates expansés, les aérogels, les poudres de polymères thermodurcissables broyés et les mélanges de deux ou plus de ces composés. De manière préférée, la composition de mortier ne contient toutefois pas d'autres granulats que des granulats végétaux ou biosourcés.

L'agent entraîneur d'air est de préférence choisi parmi les tensioactifs anioniques, les tensioactifs non-ioniques et les tensioactifs amphotères.

Les tensioactifs anioniques sont de préférence choisis parmi les sulfates d'alkyle, les sulfates d'alkyle-éther, les sulfonates d'alkaryle, les succinates d'alkyle, les sulfosuccinates d'alkyle, les sarcosinates d'alkoyle, les phosphates d'alkyle, les phosphates d'alkyléther, les carboxylates d'alkyléther et les sulfonates d'alpha-oléfines. Les tensioactifs non ioniques sont de préférence choisis parmi les alcools gras éthoxylés, les mono- ou di- alkyl alkanolamides et les polyglucosides d'alkyle. Les tensioactifs amphotères sont de préférence choisis parmi les oxydes d'amine d'alkyle, les bétaïnes d'alkyle, les bétaïnes d'amidopropyle d'alkyle, les sulfo-bétaïnes d'alkyle, les glycinates d'alkyle, les amphopropionates d'alkyle et les hydroxysultaines d'amidopropyle d'alkyle. Des agents entraîneurs d'air particulièrement préférés sont le sulfate d'alkyle de sodium (aussi appelé alkylsulfate de sodium) et les lsulfonates d'alpha-oléfines.

La teneur en agent entraîneur d'air est de préférence comprise entre 0,01 et 0,5%, notamment entre 0,05 et 0,2%, par rapport au poids de composition de mortier sec.

L'agent entraîneur d'air permet lors du gâchage d'incorporer des bulles d'air dans la pâte, et ainsi de créer une mousse. Il est alors possible de réduire la densité, et donc la conductivité thermique, du mortier durci. La formation de mousse et sa stabilité sont toutefois gênées du fait de la forte absorption de l'eau par les granulats végétaux. Les inventeurs ont pu mettre en évidence que le poly (alcool vinylique) agissait en synergie avec l'agent entraîneur d'air en facilitant la formation de la mousse et en la stabilisant, et permettait d'obtenir un matériau moins dense sans toutefois sacrifier les performances mécaniques du mortier durci. En outre, la pâte obtenue est plus fluide, ce qui permet de faciliter certaines étapes de fabrication du matériau de construction, par exemple des étapes de remplissage d'ossatures détaillées dans la suite du texte. Enfin, la présence de poly(alcool vinylique) permet d'obtenir une mousse même après un temps de mélange très court, par exemple de 2 minutes. D'autres composés capables de stabiliser la mousse, tels que des composés cellulosiques ou à base d'amidon, ne présentent pas les mêmes avantages que le poly(alcool vinylique) sur les propriétés mécaniques du mortier durci. De préférence, la composition de mortier sec ne comprend pas de polysaccharides ou de dérivés de polysaccharides, tels que notamment dérivés d'amidon, éthers de cellulose, gomme de guar, gomme de xanthane, gomme welan etc.

Le poly(alcool vinylique), aussi appelé polyvinylalcool (PVA) ou alcool polyvinylique est obtenu par hydrolyse de poly(acétate de vinyle). De préférence, le poly(alcool vinylique) est partiellement hydrolysé, notamment avec un degré d'hydrolyse entre 85 et 89%. De tels composés sont en effet plus solubles dans l'eau, ce qui facilite leur utilisation. De manière connue, le degré d'hydrolyse est défini comme le pourcentage de groupes acétate qui ont été convertis en groupes hydroxyle lors de l'hydrolyse du poly(acétate de vinyle).

Il est important que le poly(alcool vinylique) soit présent dans la composition sèche de mortier et non pas ajouté ultérieurement dans l'eau de gâchage car dans ce dernier cas les bénéfices de l'invention en termes de stabilisation de la mousse ne sont pas obtenus.

La teneur en poly(alcool vinylique) est de préférence comprise entre 0,5 et 4,0% en poids, notamment entre 1,0 et 3,9% en poids, voire entre 2,0 et 3,8% en poids, et même entre 3,0 et 3,7% en poids. La teneur est exprimée par rapport au poids de composition de mortier sec. De trop faibles teneurs ne permettent pas de stabiliser suffisamment la mousse, tandis que de trop fortes teneurs vont trop augmenter la viscosité de la pâte, augmentant alors la densité du mortier.

La composition de mortier sec peut en outre comprendre un ou plusieurs additifs choisis parmi les agents hydrofuges (par exemple des sels d'acides gras tels que le stéarate de calcium ou l'oléate de sodium, ou encore des silanes ou siloxanes), les accélérateurs de prise (par exemple le formiate de calcium ou le chlorure de calcium), les pigments et les agents dépolluants (par exemple du charbon actif).

L'invention a aussi pour objet un procédé d'obtention de matériaux de construction, comprenant le mélange de la composition de mortier sec avec de l'eau pour obtenir une pâte, puis le dépôt de ladite pâte contre ou dans un support.

Le rapport pondéral entre la quantité d'eau et la quantité de liant est de préférence compris entre 1,0 et 1,9, notamment entre 1,3 et 1,8.

Le mélange est de préférence réalisé au moyen d'un mélangeur planétaire afin d'assurer un bon entraînement de l'air.

Le matériau de construction est de préférence un mur ou une partie de mur. Il peut s'agir d'un mur porteur ou non porteur, par exemple d'une cloison. Il peut aussi s'agir d'une chape de sol.

Le mortier durci présente de préférence une conductivité thermique à 20°C inférieure ou égale à 75 mW/m.K, notamment comprise entre 60 et 72 mW/m.K.

Le mortier durci présente de préférence une épaisseur comprise entre 2 et 50 cm, notamment entre 5 et 30 cm.

Selon un mode de réalisation préféré, le matériau de construction est un panneau préfabriqué, et le dépôt de la pâte est réalisé par coulage dans un coffrage, notamment dans un coffrage fixé sur une ossature, par exemple une ossature en bois, en béton ou encore en métal, et de préférence en bois. On obtient ainsi un panneau comprenant une ossature, notamment une ossature en bois, et un remplissage en mortier durci. L'ossature peut être noyée dans le mortier durci, ou au contraire être visible et affleurante. L'épaisseur du mortier durci est de préférence comprise entre 10 et 50 cm, notamment entre 20 et 40 cm. Le panneau peut en outre être revêtu par un enduit, notamment minéral, par exemple à base de chaux aérienne. Le panneau peut être utilisé comme mur porteur ou non-porteur (par exemple dans une façade rideau ou semi-rideau). Par rapport à des panneaux fabriqués sur le chantier de construction, par exemple par projection, de tels panneaux préfabriqués permettent de simplifier la mise en œuvre du chantier, en particulier en déportant le séchage et le durcissement des panneaux.

Selon un autre mode de réalisation, le matériau de construction est un bloc ou une brique, le dépôt de la pâte étant réalisé dans un moule. De manière préférée, les blocs ou briques comprennent un évidement vertical s'étendant sur toute leur hauteur, permettant l'insertion de poteaux.

Selon encore un autre mode de réalisation, le matériau de construction est un enduit, extérieur ou intérieur, et le dépôt de la pâte est réalisé par application sur un substrat, notamment une paroi, par exemple de maçonnerie.

Les exemples qui suivent illustrent l'invention de manière non-limitative.

Des compositions de mortiers sec ont été obtenues en mélangeant du clinker Portland, de la chaux aérienne, de la chènevotte, un agent entraîneur d'air et un poly(alcool vinylique), dans les proportions massiques indiquées dans le tableau 1 ci-après. Le poly(alcool vinylique), noté PVA dans le tableau, était un poly(alcool vinylique) partiellement hydrolysé (degré d'hydrolyse de 85 à 89%) commercialisé sous la référence commerciale E575S par la société Sekisui. Les compositions ont ensuite été gâchées avec de l'eau (rapport eau/mortier sec de 1,07) pendant 2 minutes dans un mélangeur planétaire à une vitesse de rotation de 140 tours par minutes.

Les pâtes obtenues ont ensuite été coulées dans un moule de 4*16*4 cm³. Après durcissement (2 jours sous film plastique, puis 5 jours à 95% d'humidité relative puis 21 jours à 21°C et 55% d'humidité relative), les résistances à la compression (Rc) et à la flexion (Rf) ont été mesurées. La mesure de conductivité thermique (λ) a en outre été mesurée après un séchage supplémentaire pendant 3 jours à 40°C.

**[Table 1]**

| | C1 | C2 | C3 | 1 | 2 | 3 |
|---|---|---|---|---|---|---|
| Clinker Portland | 32,2% | 31,6% | 31,1% | 31,2% | 30,6% | 30,4% |
| Chaux aérienne | 32,2% | 31,6% | 31,1% | 31,2% | 30,6% | 30,4% |
| Chènevotte | 35,5% | 35,3% | 35,3% | 35,5% | 35,5% | 35,5% |
| Entraineur d'air | 0,1% | - | - | 0,1% | 0,1% | 0,1% |
| PVA | - | 1,5% | 2,5% | 2,1% | 3,1% | 3,5% |
| | | | | | | |
| Rc (kPa) | 411 | 416 | 789 | | 320 | 294 |
| Rf (kPa) | 262 | 170 | 390 | | 293 | 252 |
| λ (mW/m.K) | 80 | 79 | 84 | 66 | 70 | 69 |
| MV (kg/m³) | 305 | 305 | 296 | 260 | 268 | 272 |

L'exemple comparatif C1 n'utilise pas de poly(alcool vinylique) et les exemples C2 n'utilisent pas d'agent entraîneur d'air. Dans les deux cas, la conductivité thermique est élevée, autour de 80 mW/m.K. L'utilisation conjointe, selon l'invention, de poly(alcool vinylique) et d'agent entraîneur d'air permet en revanche de réduire significativement la conductivité thermique, tout en conservant des résistances mécaniques acceptables.

## Revendications

1. Composition de mortier sec comprenant un liant, des granulats végétaux ou biosourcés, un agent entraîneur d'air et du poly(alcool vinylique).

2. Composition de mortier sec selon la revendication 1, dans laquelle le liant est un liant hydraulique ou aérien comprenant de la chaux.

3. Composition de mortier sec selon la revendication précédente, dans laquelle le liant hydraulique ou aérien comprenant de la chaux est choisi parmi la chaux aérienne, la chaux hydraulique et le ciment naturel prompt.

4. Composition de mortier sec selon l'une des revendications précédentes, dans laquelle le liant comprend du clinker Portland.

5. Composition de mortier sec selon la revendication précédente, dans laquelle le liant est constitué de clinker Portland et de chaux aérienne, le rapport massique entre le clinker Portland et la chaux aérienne étant de préférence compris entre 1 :2 et 2 :1.

6. Composition de mortier sec selon l'une des revendications précédentes, dans laquelle les granulats végétaux ou biosourcés sont choisi parmi les granulats de chanvre, de lin, de miscanthus, de maïs, de sorgho, de riz, de bagasses de canne, de paille de céréales, de paille de colza, de paille de tournesol, de paille de maïs, de kénaf, de noix de coco, de bambou, de sciure de bois, de copeaux de bois et leurs mélanges.

7. Composition de mortier sec selon l'une des revendications précédentes, dans laquelle la teneur en liant est comprise entre 45 et 80% et la teneur en granulats végétaux ou biosourcés est comprise entre 20 et 55%, par rapport au poids de composition de mortier sec.

8. Composition de mortier sec selon la revendication précédente, dans laquelle la teneur en liant est comprise entre 50 et 75% et la teneur en granulats végétaux ou biosourcés est comprise entre 25 et 50%, par rapport au poids de composition de mortier sec.

9. Composition de mortier sec selon l'une des revendications précédentes, dans laquelle l'agent entraîneur d'air est choisi parmi les tensioactifs anioniques, les tensioactifs non-ioniques et les tensioactifs amphotères.

10. Composition de mortier sec selon l'une des revendications précédentes, dans laquelle la teneur en agent entraîneur d'air est comprise entre 0,01 et 0,5%, notamment entre 0,05 et 0,2%, par rapport au poids de composition de mortier sec.

11. Composition de mortier sec selon l'une des revendications précédentes, dans laquelle le poly(alcool vinylique) est partiellement hydrolysé, notamment avec un degré d'hydrolyse entre 85 et 89%.

12. Composition de mortier sec selon l'une des revendications précédentes, dans laquelle la teneur en poly(alcool vinylique) est comprise entre 0,5 et 4,0% en poids, notamment entre 1,0 et 3,9% en poids.

13. Procédé d'obtention de matériaux de construction, comprenant le mélange de la composition de mortier sec selon l'une des revendications précédentes avec de l'eau pour obtenir une pâte, puis le dépôt de ladite pâte contre ou dans un support.

14. Procédé selon la revendication précédente, dans lequel le matériau de construction est un panneau préfabriqué, et le dépôt de la pâte est réalisé par coulage dans un coffrage.

15. Matériau de construction, notamment panneau préfabriqué, brique, bloc ou enduit, obtenu à partir du procédé de la revendication 13 ou 14.
